(19) Europäisches Patentamt / European Patent Office / Office européen des brevets

(11) EP 2 058 351 A1

(12) EUROPEAN PATENT APPLICATION
published in accordance with Art. 153(4) EPC

(43) Date of publication:
**13.05.2009 Bulletin 2009/20**

(21) Application number: **07792136.9**

(22) Date of filing: **01.08.2007**

(51) Int Cl.:
***C08G 63/08*** *(2006.01)* ***C08G 63/90*** *(2006.01)*
***C08L 101/16*** *(2006.01)*

(86) International application number:
**PCT/JP2007/065468**

(87) International publication number:
**WO 2008/018474 (14.02.2008 Gazette 2008/07)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **08.08.2006 JP 2006216054**

(71) Applicants:
- **Teijin Engineering Ltd**
  **Chuo-ku**
  **Osaka-shi**
  **Osaka 541-0054 (JP)**
- **Musashino Chemical Laborarory Ltd.**
  **Tokyo 104-0031 (JP)**

(72) Inventors:
- **SUZUKI, Hirotaka**
  **Iwakuni-shi, Yamaguchi 7400014 (JP)**
- **TAKADA, Masayuki**
  **Chuo-ku, Tokyo 1040031 (JP)**

(74) Representative: **Hallybone, Huw George et al**
**Carpmaels & Ransford**
**43-45 Bloomsbury Square**
**London WC1A 2RA (GB)**

# (54) POLYLACTIC ACID AND METHOD FOR PRODUCING THE SAME

(57) A method of producing a stereocomplex polylactic acid having a high melting point and a high molecular weight, wherein only stereocomplex crystals are grown even when melting and crystallization are repeated. The method comprises the steps of:
(1) obtaining a first polylactic acid by the ring-opening polymerization of a first lactide composed of lactic acid units of the same chirality;
(2) obtaining a purified first polylactic acid by removing the lactide from the first polylactic acid in a molten state under reduced pressure;
(3) obtaining a second polylactic acid by the ring-opening polymerization of a second lactide which differs from the first lactide in chirality in the presence of the purified first polylactic acid; and
(4) obtaining a purified second polylactic acid by removing the lactide from the second polylactic acid in a molten state under reduced pressure.

EP 2 058 351 A1

## Description

TECHNICAL FIELD

The present invention relates to polylactic acid and a method of producing the same.

BACKGROUND ART

Most petroleum-derived plastics are light in weight, tough and durable, can be molded easily and arbitrarily and have been mass-produced to support our lives in many ways. However, when these plastics are thrown away into the environment, they are not easily decomposed and are accumulated. When they are burnt, they generate a large amount of carbon dioxide, thereby accelerating global warming.

In view of this situation, researches into resins made from non-oil raw materials or biodegradable plastics which are degraded by microorganisms are now actively under way. Almost all the biodegradable plastics now under study have an aliphatic carboxylate unit and are easily degraded by microorganisms. On the other hand, they have low heat stability and therefore have a serious problem such as a reduction in their molecular weights or the deterioration of their colors in the molding step where they are exposed to a high temperature, such as melt spinning, injection molding or melt film formation.

Although polylactic acid, out of these, is a plastic which has excellent heat resistance and good balance between color and mechanical strength, it has lower heat resistance than petrochemical-based polyesters typified by polyethylene terephthalate and polybutylene terephthalate. For instance, when it is formed into a fabric, the fabric cannot be ironed.

To overcome this situation, various studies have been made on the improvement of the heat resistance of polylactic acid. One of the solutions is a stereocomplex polylactic acid. The stereocomplex polylactic acid is a polylactic acid containing stereocomplex crystals and has a 30 to 50°C higher melting point than a commonly used polylactic acid consisting of homocrystals.

However, the stereocomplex crystals are not always developed but the homocrystals are often developed at a high molecular weight range in particular. Even when a stereocomplex polylactic acid consisting of stereocomplex crystals is crystallized after it is remolten, the homocrystals may be existent. To improve this phenomenon, a crystal nucleating agent for growing only the stereocomplex crystals is now under study.

For example, Patent Document 1 discloses that a mixture obtained by mixing a chloroform/hexafluoro-2-propanol solution of poly(L-lactic acid) having a weight average molecular weight (Mw) of about 120,000 and poly(D-lactic acid) in the presence of an oxamide derivative is found to be a stereocomplex polylactic acid consisting of stereocomplex crystals by DSC measurement.

Patent Document 2 teaches that a stereocomplex polylactic acid consisting of stereocomplex crystals is obtained by using an aromatic urea-based compound by the same method as in Patent Document 1.

However, since a large amount of a halogen-containing organic solvent is used to produce a stereocomplex polylactic acid by these methods, a process for collecting the solvent is required and the environmental load becomes marked. Since the oxamide derivative and the aromatic urea-based compound are nitrogen-containing compounds, they have a problem such as a reduction in molecular weight, and it is substantially impossible to obtain a stereocomplex polylactic acid having an Mw of 150,000 or more.

Further, Patent Document 3 teaches a method of producing a multi-block copolymer of poly(L-lactic acid) and poly(D-lactic acid) having a relatively short chain length and an Mw of less than 100,000. The copolymer is said to be a stereocomplex polylactic acid consisting of stereocomplex crystals. However, each time the number of blocks of the copolymer is increased, re-precipitation must be carried out. Therefore, it is not suitable for industrial-scale production.

Patent Document 4 discloses a method of producing a stereocomplex polylactic acid by polymerizing D-lactide in the presence of poly(L-lactic acid). In this method, a reaction is carried out under increased pressure to suppress the evaporation of lactide and unreacted lactide is apt to remain in the reaction system, thereby reducing the melting point of the obtained stereocomplex polylactic acid.

As described above, a method of producing a stereocomplex polylactic acid having a high molecular weight and a high crystal melting point, wherein only stereocomplex crystals are grown even when melting and crystallization are repeated is not proposed yet.

(Patent Document 1) JP-A 2005-255806
(Patent Document 2) JP-A 2005-269588
(Patent Document 3) JP-A 2002-356543
(Patent Document 4) USP 5317064

DISCLOSURE OF THE INVENTION

It is an object of the present invention to provide a polylactic acid having a high melting point, wherein the growth of stereocomplex crystals is promoted even when melting and crystallization are repeated and a method of producing the same.

The inventors of the present invention have found that, in the method of producing a stereocomplex polylactic acid from L-lactide and D-lactide, when polylactic acid is produced by the ring-opening polymerization of one of the lactides, the content of the lactide in the obtained polylactic acid is reduced, and the other lactide is ring-opening polymerized in the presence of the polylactic acid, a polylactic acid having a high melting point, wherein the growth of stereocomplex crystals is promoted even when melting and crystallization are repeated, is obtained. The present invention has been accomplished based on this finding.

That is, the present invention is a method of producing polylactic acid, comprising the steps of:

(1) obtaining a first polylactic acid by the ring-opening polymerization of a first lactide composed of lactic acid units of the same chirality;
(2) obtaining a purified first polylactic acid by removing the lactide from the first polylactic acid in a molten state under reduced pressure;
(3) obtaining a second polylactic acid by the ring-opening polymerization of a second lactide which differs from the first lactide in chirality in the presence of the purified first polylactic acid; and
(4) obtaining a purified second polylactic acid by removing the lactide from the second polylactic acid in a molten state under reduced pressure.

The present invention is also a polylactic acid which comprises a segment composed of an L-lactic acid unit and a segment composed of a D-lactic acid unit and has a weight average molecular weight of 150, 000 to 300, 000 and a crystal melting point of 190 to 250°C which is observed in a temperature elevation process even when a program composed of a temperature elevation process from 20 to 250°C and a cooling process from 250 to 20°C is repeated 3 times in DSC. Further, the present invention includes a molded article of the polylactic acid.

BEST MODE FOR CARRYING OUT THE INVENTION

<polylactic acid production method>

(step (1))

The step (1) is to obtain a first polylactic acid by the ring-opening polymerization of a first lactide composed of lactic acid units of the same chirality.

Lactide is a cyclic compound having two ester bonds in the molecule formed by the dehydration condensation of the hydroxyl groups and carboxyl groups of two molecules of lactic acid. Therefore, the expression "composed of lactic acid units of the same chirality" means L-lactide formed by the dehydration condensation of two molecules of L-lactic acid or D-lactide formed by the dehydration condensation of two molecules of D-lactic acid. Therefore, the first lactide is L-lactide or D-lactide. When the first lactide is L-lactide, the second lactide which will be described hereinafter is D-lactide. When the first lactide is D-lactide, the second lactide which will be described hereinafter is L-lactide.

The purity of the first lactide is preferably 90 mol% or more, more preferably 95 mol% or more, much more preferably 98 mol% or more. Another component is a lactide having a different chirality or a component except lactic acid. The content of the another component is preferably 10 mol% or less, more preferably 5 mol% or less, much more preferably 2 mol% or less. Examples of the another component include a dicarboxylic acid, polyhydric alcohol, hydroxycarboxylic acid and lactone having a functional group capable of forming two or more ester bonds.

Examples of the dicarboxylic acid include succinic acid, adipic acid, azelaic acid, sebacic acid, terephthalic acid and isophthalic acid. Examples of the polyhydric acid include aliphatic polyhydric alcohols such as ethylene glycol, propylene glycol, butanediol, pentanediol, hexanediol, octanediol, glycerin, sorbitan, neopentyl glycol, diethylene glycol, triethylene glycol, polyethylene glycol and polypropylene glycol, and aromatic polyhydric alcohols such as bisphenol adduct with ethylene oxide. Examples of the hydroxycarboxylic acid include glycolic acid and hydroxybutyric acid. Examples of the lactone include glycolide, ε-caprolactone glycolide, ε-caprolactone, β-propiolactone, δ-butyrolactone, β- or γ-butyrolactone, pivalolactone and δ-valerolactone. The optical purity of the first lactide is preferably 98 mol% or more.

The ring-opening polymerization of the first lactide may be carried out by heating the first lactide in the presence of a metal catalyst in a reactor.

The metal catalyst is a compound containing at least one metal element selected from the group consisting of alkali earth metals, rare earth metals, third row transition metals, aluminum, germanium, tin and antimony. The alkali

earth metals include magnesium, calcium and strontium. The rare earth elements include scandium, yttrium, lanthanum and cerium. The third row transition metals include iron, cobalt, nickel, zinc and titanium.

The metal catalyst may be added as a carboxylate, alkoxide, aryloxide or enolate of β-diketone of one of these metals. In consideration of polymerization activity and color, tin octylate, titanium tetraisopropoxide and aluminum triisopropoxide are particularly preferred.

The amount of the catalyst is preferably 0.001 to 0.1 part by weight, more preferably 0.003 to 0.01 part by weight based on 100 parts by weight of the lactide.

An alcohol may be used as a polymerization initiator. Preferably, the alcohol does not impede the polymerization of the polylactic acid and is nonvolatile, as exemplified by decanol, dodecanol, tetradecanol, hexadecanol and octadecanol.

The reaction is preferably carried out in an inert gas atmosphere such as nitrogen or argon. The reaction time is preferably 15 minutes to 3 hours, more preferably 30 minutes to 2 hours. The reaction temperature is preferably 150 to 250°C, more preferably 170 to 210°C. The ring-opening polymerization may be carried out by using a conventionally known production apparatus such as a vertical reactor equipped with a helical ribbon blade or high-viscosity stirring blade.

(step (2))

The step (2) is to obtain a purified first polylactic acid by removing the lactide from the first polylactic acid in a molten state under reduced pressure.

The first polylactic acid obtained by ring-opening polymerization contains an unreacted first lactide. The inventors of the present invention have found that when the ring-opening polymerization of the second lactide is carried out in the presence of the first polylactic acid containing a predetermined amount of the first lactide, the crystal melting point of the obtained second polylactic acid tends to drop. By removing the first lactide, the block copolymer can be prevented from becoming a random copolymer and the melting point of the obtained stereocomplex polylactic acid becomes 190°C or higher.

The removal of the lactide can be carried out by reducing the inside pressure of the reaction system. The inside pressure of the reaction system is preferably 0.133 to 66.5 kPa, more preferably 0.133 to 33.25 kPa. The inside temperature of the reaction system is preferably 150 to 250°C, more preferably 160 to 230°C. The removal of the lactide is preferably carried out at a temperature of 150 to 250°C and a pressure of 0.133 to 66.5 kPa.

The step (2) may be carried out by re-melting the first polylactic acid obtained in the step (1) after it is solidified. Alternatively, the step (2) may be carried out while the first polylactic acid obtained in the step (1) is molten.

The lactide content of the purified first polylactic acid is preferably as small as possible. The lactide content of the purified first polylactic acid is preferably 0 wt% or more and less than 1 wt%, more preferably 0 wt% or more and less than 0.5 wt%.

The weight average molecular weight of the purified first polylactic acid is preferably 100,000 to 300,000, more preferably 100,000 to 200,000, much more preferably 100,000 to 180,000.

(step (3))

The step (3) is to obtain a second polylactic acid by the ring-opening polymerization of a second lactide which differs from the first lactide in chirality in the presence of the purified first polylactic acid. The optical purity of the second lactide is preferably 98 mol% or more.

The amount of the second lactide is preferably 30 to 200 parts by weight, more preferably 50 to 150 parts by weight based on 100 parts by weight of the purified first polylactic acid. When the amount of the lactide is too small or too large, the block copolymer is not formed and only poly(L-lactic acid) or poly(D-lactic acid) is formed. The reaction atmosphere is preferably an inert gas atmosphere such as nitrogen or argon. By adopting this method, the purified second polylactic acid having a high molecular weight and a high melting point, wherein only stereocomplex crystals are grown even when melting and crystallization are repeated, which is an object of the present invention, can be obtained.

(step (4))

The step (4) is to obtain a purified second polylactic acid by removing the lactide from the second polylactic acid in a molten state under reduced pressure.

Since the second polylactic acid contains an unreacted second lactide, this lactide is preferably removed. The removal of the lactide may be carried out by reducing the inside pressure of the reaction system. The inside pressure of the reaction system is preferably 0.133 to 66.5 kPa, more preferably 0.133 to 33.25 kPa. The inside temperature of the reaction system is preferably 150 to 250°C, more preferably 160 to 230°C. The removal of the lactide is preferably carried out at a temperature of 150 to 250°C and a pressure of 0.133 to 66.5 kPa.

The lactide content of the purified second polylactic acid is preferably as small as possible. The lactide content is preferably 0 wt% or more and less than 1.5 wt%, more preferably 0 wt% or more and less than 1 wt%.

The weight average molecular weight of the purified second polylactic acid is preferably 150, 000 to 300, 000, more preferably 150,000 to 250,000.

The stereocomplex crystal content of the purified second polylactic acid is preferably 80 % or more, more preferably 95 % or more, much more preferably 100 %.

The purified second polylactic acid has a crystal melting point of preferably 190 to 250°C, more preferably 200 to 240°C, much more preferably 210 to 230°C which is observed in a temperature elevation process even when a program composed of a temperature elevation process from 20 to 250°C and a cooling process from 250 to 20°C is repeated 3 times in DSC.

The step (4) may be carried out by melting the first polylactic acid obtained in step (3) after it is solidified. Alternatively, the step (4) may be carried out while the first polylactic acid obtained in step (3) is molten.

<polylactic acid>

The polylactic acid of the present invention comprises a segment composed of an L-lactic acid unit and a segment composed of a D-lactic acid unit and has a weight average molecular weight of 150, 000 to 300, 000 and a crystal melting point of 190 to 250°C which is observed in a temperature elevation process even when a program composed of a temperature elevation process from 20 to 250°C and a cooling process from 250 to 20°C is repeated 3 times in DSC. The polylactic acid of the present invention is a so-called stereocomplex polylactic acid which forms stereocomplex crystals.

The L-lactic acid unit or the D-lactic acid unit is represented by the following formula.

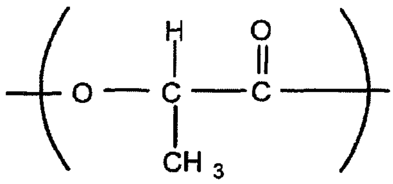

The weight average molecular weight of the polylactic acid of the present invention is 150,000 to 300,000, preferably 150,000 to 250,000. In this text, the weight average molecular weight (Mw) is a weight average molecular weight in terms of standard polystyrene measured by gel permeation chromatography (GPC) using chloroform as an eluent.

The polylactic acid of the present invention has a crystal melting point of 190 to 250°C which is observed in a temperature elevation process even when a program composed of a temperature elevation process from 20 to 250°C and a cooling process from 250 to 20°C is repeated 3 times in DSC (differential scanning calorimeter). The crystal melting point is preferably 200 to 240 °C, more preferably 210 to 230 °C. That is, this means that stereocomplex crystals are grown even when melting and crystallization are repeated.

Preferably, the polylactic acid of the present invention has a lactide content of 0 wt% or more and less than 1 wt%.

The stereocomplex crystal content (S) of the polylactic acid of the present invention is preferably 80 % or more, more preferably 95 % or more, much more preferably 100 %. The stereocomplex crystal content (S) is represented by the following equation.

$$S = \{\Delta Hb/(\Delta Ha + \Delta Hb)\} \times 100\ (\%)$$

In the above equation, ΔHa and ΔHb represent the melting enthalpy (ΔHa) of a crystal melting point which appears at 150 to 190°C and the melting enthalpy (ΔHb) of a crystal melting point which appears at 190 to 250°C in the temperature elevation process of the differential scanning calorimeter (DSC), respectively.

In the present invention, the crystal melting point of the polylactic acid is preferably 190 to 250°C, more preferably 200 to 220°C. The melting enthalpy (ΔHa) of a crystal melting point which appears at 150 to 190°C is preferably less than 4 J/g, more preferably less than 2 J/g. The melting enthalpy (ΔHb) of a crystal melting point which appears at 190 to 250°C is preferably 20 J/g or more, more preferably 30 J/g or more, much more preferably 40 J/g or more.

To achieve excellent heat resistance for the polylactic acid, the stereocomplex crystal content, the crystal

melting point and the melting enthalpy are preferably within the above numerical ranges.

The (L/D) ratio of the first polylactic acid to the second polylactic acid is preferably 30/70 to 70/30, more preferably 40/60 to 60/40. When the L/D ratio is outside the above range, the crystallinity of the stereocomplex polylactic acid degrades.

The polylactic acid obtained by the present invention is a mixture of (i-1) poly(L-lactic acid) and (i-2) a block copolymer composed of an L-lactic acid segment and a D-lactic acid segment, or a mixture of (ii-1) poly(D-lactic acid) and (ii-2) a block copolymer composed of an L-lactic acid segment and a D-lactic acid segment.

The weight ratio of the poly(L-lactic acid) (i-1) to the block copolymer (i-2) is preferably 100/30 to 100/200, more preferably 100/50 to 100/150. Similarly, the weight ratio of the poly(D-lactic acid) (ii-1) to the block copolymer (ii-2) is preferably 100/30 to 100/200, more preferably 100/50 to 100/150.

The polylactic acid of the present invention may contain commonly used additives such as a plasticizer, antioxidant, optical stabilizer, ultraviolet absorbent, heat stabilizer, lubricant, release agent, fillers, antistatic agent, flame retardant, foaming agent, filler, antibacterial/antifungus agent, nucleus forming agent, dye and colorant including pigment as long as the object of the present invention is not impaired.

<molded article>

The present invention further includes a molded article of the polylactic acid of the present invention. Injection molded articles, extrusion molded articles, vacuum pressure molded articles, blow molded articles, films, sheet nonwoven fabrics, fibers, cloth, composites with another material, agricultural materials, fishing materials, civil engineering and construction materials, stationery, medical supplies and other molded articles can be obtained from the polylactic acid of the present invention, and molding can be carried out by a commonly used method.

Examples

The following examples are provided for the purpose of further illustrating the present invention but are in no way to be taken as limiting. The physical properties of the composition were measured by the following methods in the examples.

(1) Weight average molecular weight (Mw)

The weight average molecular weight (Mw) was measured by dissolving 50 mg of a sample in 5 ml of chloroform and developing it with chloroform at 40°C by means of the GPC-11 of Shodex Co., Ltd. The weight average molecular weight (Mw) was calculated in terms of polystyrene.

(2) Lactide content of polylactic acid

The lactide content of the first polylactic acid was determined based on the ratio of a quartet peak area derived from lactide (4.98 to 5.05 ppm) to a quartet peak area derived from polylactic acid (5.10 to 5.20 ppm) in heavy chloroform by using the JNM-EX270 Spectral Meter nuclear magnetic resonance apparatus of JEOL Ltd. The lactide content of the second polylactic acid was determined in the same manner as the first polylactic acid except that a solution of heavy chloroform and hexafluoro-2-propanol (v/v ratio of 95/5) was used in place of the above heavy chloroform.

(3) Ratio of first polylactic acid to second polylactic acid (L/D)

The L/D was obtained based on the following equation by using a specific optical rotation [α] measured in a solution of chloroform and hexafluoro-2-propanol (v/v ratio of 95/5) at 25°C.

$$L/D = ([\alpha]/320 + 0.5)/(0.5 + [\alpha]/(-320))$$

[In the equation, 320 is the specific optical rotation of pure L-lactic acid and -320 is the specific optical rotation of pure D-lactic acid.]

(4) Stereocomplex crystal content (S)

The stereocomplex crystal content (S) was calculated based on the following equation from crystal melting

enthalpy ΔHa which appeared at 150 to 190°C and crystal melting enthalpy ΔHb which appeared at 190 to 250°C in DSC.

$$S\ (\%) = \{\Delta Hb/(\Delta Ha + \Delta Hb)\} \times 100\ (\%)$$

(5) 3 repetitions of DSC measurement

5 mg of the sample was put into a dedicated aluminum pan to be measured by means of the differential scanning calorimeter (DSC2920) of TA instruments Co., Ltd. The measurement conditions are shown below. The crystal melting enthalpy was calculated from the area of a region surrounded by a crystal melting peak and a base line which appeared in the DSC chart to obtain the stereocomplex crystal content (S). The crystal melting point was also measured.

(a) The sample was heated from 20 to 250°C at a rate of 20°C/min.
(b) The sample was cooled to 20°C at a rate of 45°C/sec by using dry ice after the temperature reached 250°C.
(c) The above processes (a) and (b) were repeated 3 times in total.

Example 1

(step (1): production of first polylactic acid)

100 parts by weight of L-lactide (manufactured by Musashino Chemical Laboratory, Ltd., optical purity of 99 % or more) and 0.15 part by weight of stearyl alcohol were fed to a polymerization reactor equipped with a cold distillation tube from a stock feed port in a nitrogen stream. Subsequently, the inside of the reactor was substituted by nitrogen 5 times, and L-lactide was molten at 190°C. When L-lactide was completely molten, 0.05 part by weight of tin 2-ethylhexanoate was added from the stock feed port together with 500 μl of toluene to carry out polymerization at 190°C for 1 hour so as to obtain a first polylactic acid.

(step (2): removal of lactide)

The inside of the reactor was reduced to 1.33 kPa to remove excess lactide so as to obtain a purified first polylactic acid. The Mw and lactide content of the obtained purified first polylactic acid are shown in Table 1.

(step (3): production of second polylactic acid)

100 parts by weight of D-lactide (manufactured by Musashino Chemical Laboratory, Ltd., optical purity of 99 % or more) was added to the purified first polylactic acid (PLLA) in a molten state obtained in the step (2) from the stock feed port in a nitrogen stream. The reactor was maintained at 190°C to carry out ring-opening polymerization for 2 hours so as to obtain a second polylactic acid.

(step (4): removal of lactide)

After the end of polymerization, excess lactide was removed by heating the reactor at 230°C and reducing the inside pressure of the reactor to 1.33 kPa. Finally, the polymer was ejected as an amorphous strand from the exhaust port of the reactor, and the strand was cut into a pellet while it was cooled with water. Then, the pellet was left in a hot air circulation type drier heated at 180°C for 1 hour to obtain a purified second polylactic acid pellet. The Mw, lactide content and L/D of the purified second polylactic acid are shown in Table 1. The crystal melting enthalpy, the stereocomplex crystal content (S) and the crystal melting point are shown in Table 2.

Example 2

(steps (1) and (2))

The operation of the step (1) of Example 1 was repeated to obtain a purified first polylactic acid except that the amount of stearyl alcohol was changed from 0.15 part by weight to 0.2 part by weight. The Mw and lactide content of the purified first polylactic acid are shown in Table 1. (steps (3) and (4))
The operation of Example 1 was repeated to obtain a purified second polylactic acid. The Mw, lactide content and L/D of the purified second polylactic acid are shown in Table 1. The crystal melting enthalpy, the stereocomplex

crystal content (S) and the crystal melting point are shown in Table 2.

Synthesis Example 1

(synthesis of PDLA)

100 parts by weight of D-lactide (manufactured by Musashino Chemical Laboratory, Ltd.) and 0.15 part by weight of stearyl alcohol were fed to a polymerization reactor equipped with a cold distillation tube from a stock feed port in a nitrogen stream. Subsequently, the inside of the reactor was substituted by nitrogen 5 times, and D-lactide was molten at 190°C. When D-lactide was completely molten, 0.05 part by weight of tin 2-ethylhexanoate was added from the stock feed port together with 500 μl of toluene to carry out polymerization at 190°C for 1 hour. Thereafter, the inside pressure of the reactor was reduced to 1.33 kPa to remove excess lactide. The Mw of the obtained PDLA was 198,422.

Comparative Example 1

The purified first polylactic acid (PLLA) obtained in the step (2) of Example 1 and PDLA obtained in Synthesis Example 1 were kneaded together at 240°C for 10 minutes by using the Laboplatomill 50C150 of Toyo Seiki Co., Ltd. to obtain a pellet. The Mw, lactide content and L/D of the obtained pellet are shown in Table 1. The crystal melting enthalpy, the stereocomplex crystal content (S) and the crystal melting point are shown in Table 2.

Comparative Example 2

(steps (1) and (2))

The operations of the step (1) and (2) of Example 1 were repeated to obtain a non-purified first polylactic acid except that the lactide was not removed.

(step (3))

100 parts by weight of D-lactide (optical purity of 99 % or more, manufactured by Musashino Chemical Laboratory, Ltd.) was added to the non-purified first polylactic acid in a molten state obtained in the step (2) from the stock feed port in a nitrogen stream, the reactor was maintained at 190°C, and ring-opening polymerization was continued for 2 hours to obtain a second polylactic acid.

(step (4))

After the end of polymerization, excess lactide was removed by heating the reactor at 230°C and reducing the inside pressure of the reactor to 1. 33 kPa to obtain a purified second polylactic acid. Finally, the polymer was ejected as an amorphous strand from the exhaust port of the reactor, and the strand was cut into a pellet while it was cooled with water. Then, the pellet was left in a hot air circulation type drier heated at 180°C for 1 hour. The Mw, lactide content and L/D of the obtained purified second polylactic acid are shown in Table 1. The crystal melting enthalpy, the stereocomplex crystal content (S) and the crystal melting point are shown in Table 2.

Example 3

The purified second polylactic acid pellet obtained in Example 1 was dried at 110°C for 5 hours, molten at 245°C by using a melt spinning machine equipped with a double-screw extruder and ejected from a nozzle having one discharge nozzle with a diameter of 0.25 mm, and unstretched yarn was taken up at a rate of 500 m/min. This unstretched yarn was stretched to 3.5 times by preheating at 70°C and then heat set at 190°C to obtain 1.33 dtex polylactic acid fibers. The crystal melting enthalpy, stereocomplex crystal content (S) and crystal melting point of the obtained stretched yarn are shown in Table 2.

Example 4

The purified second polylactic acid pellet obtained in Example 1 was dried at 110°C for 5 hours, and molten and formed into a film by using a melt film forming machine equipped with a double-screw extruder. The pellet was melt extruded into a film having a thickness of 210 μm at a die temperature of the film forming machine of 260°C and a take-up rate of 40 m/min. The crystal melting enthalpy, stereocomplex crystal content (S) and crystal melting point of the

obtained film are shown in Table 2.

Table 1

| | | Example 1 | Example 2 | C.Example 1 | C.Example 2 |
|---|---|---|---|---|---|
| Purified first polylactic acid | Mw | 196,021 | 116,271 | 196,021 | 195,539 |
| | Lactide content (%) | 0.45 | 0.46 | 0.45 | 2.45 |
| Purified second polylactic acid | Mw | 218,747 | 157,491 | 162,581 | 224,932 |
| | Lactide content (%) | 0.86 | 0.88 | 0.98 | 0.97 |
| | L/D | 64.3/35.7 | 58.5/41.5 | 49.8/50.2 | 49.7/50.3 |
| C.Example : Comparative Example | | | | | |

Table 2

| | Number of times of scanning | ΔHa (J/g) | ΔHb (J/g) | S (%) | crystal melting point (°C) |
|---|---|---|---|---|---|
| Ex. 1 | First | 0 | 59.2 | 100 | 220 |
| | Second | 0 | 50.1 | 100 | 218 |
| | Third | 0 | 47.7 | 100 | 218 |
| Ex.2 | First | 0 | 60.2 | 100 | 220 |
| | Second | 0 | 55.4 | 100 | 219 |
| | Third | 0 | 51.2 | 100 | 219 |
| Ex.3 | First | 0 | 47.8 | 100 | 217 |
| | Second | 0 | 45.9 | 100 | 217 |
| | Third | 0 | 46.1 | 100 | 216 |
| Ex.4 | First | 0 | 50.8 | 100 | 218 |
| | Second | 0 | 51.2 | 100 | 217 |
| | Third | 0 | 51.8 | 100 | 216 |
| C.Ex.1 | First | 26.1 | 32.1 | 55.2 | 217 |
| | Second | 24.8 | 29.9 | 54.7 | 217 |
| | Third | 25.7 | 28.5 | 52.6 | 215 |
| C.Ex.2 | First | 0 | 44.3 | 100 | 188 |
| | Second | 0 | 45.2 | 100 | 188 |
| | Third | 0 | 42.1 | 100 | 187 |
| Ex.: Example C.Ex.: Comparative Example<br>S: stereocomplex crystal content (%) | | | | | |

Effect of the Invention

According to the production method of the present invention, there can be provided a polylactic acid having a high melting point and a high weight average molecular weight, wherein stereocomplex crystals are grown even when melting and crystallization are repeated.

The polylactic acid of the present invention has a high melting point and a high molecular weight, wherein stereocomplex crystals are grown even when melting and crystallization are repeated, all of which a conventional stereocomplex polylactic acid does not have.

Industrial Applicability

Since the composition of the present invention has excellent heat resistance with a high melting point, it can be melt molded into yarn, film or another molded product.

## Claims

1. A method of producing a polylactic acid, comprising the steps of:

    (1) obtaining a first polylactic acid by the ring-opening polymerization of a first lactide composed of lactic acid units of the same chirality;
    (2) obtaining a purified first polylactic acid by removing the lactide from the first polylactic acid in a molten state under reduced pressure;
    (3) obtaining a second polylactic acid by the ring-opening polymerization of a second lactide which differs from the first lactide in chirality in the presence of the purified first polylactic acid; and
    (4) obtaining a purified second polylactic acid by removing the lactide from the second polylactic acid in a molten state under reduced pressure.

2. The method according to claim 1, wherein (i) the first lactide is L-lactide and the second lactide is D-lactide, or (ii) the first lactide is D-lactide and the second lactide is L-lactide.

3. The method according to claim 1, wherein the lactide content of the purified first polylactic acid is 0 wt% or more and less than 1 wt%.

4. The method according to claim 1, wherein the first lactide and the second lactide have an optical purity of 98 mol% or more.

5. The method according to claim 1, wherein the lactide content of the purified second polylactic acid is 0 wt% or more and less than 1.5 wt%.

6. The method according to claim 1, wherein the removal of the lactide in the step (2) is carried out at a temperature of 150 to 250°C and a pressure of 0.133 to 66.5 kPa.

7. The method according to claim 1, wherein the removal of the lactide in the step (4) is carried out at a temperature of 150 to 250°C and a pressure of 0.133 to 66.5 kPa.

8. The method according to claim 1, wherein the purified first polylactic acid has a weight average molecular weight of 100,000 to 300,000.

9. The method according to claim 1, wherein the purified second polylactic acid has a weight average molecular weight of 150,00 to 300,000.

10. The method according to claim 1, wherein the purified second polylactic acid has a stereocomplex crystal content of 80 % or more.

11. The method according to claim 1, wherein the purified second polylactic acid has a crystal melting point of 190 to 250°C which is observed in a temperature elevation process even when a program composed of a temperature elevation process from 20 to 250°C and a cooling process from 250 to 20°C is repeated 3 times in DSC.

12. A polylactic acid comprising a segment composed of an L-lactic acid unit and a segment composed of a D-lactic acid unit, and having a weight average molecular weight of 150, 000 to 300,000 and a crystal melting point of 190 to 250°C which is observed in a temperature elevation process even when a program composed of a temperature elevation process from 20 to 250°C and a cooling process from 250 to 20°C is repeated 3 times in DSC.

13. The polylactic acid according to claim 12 which has a lactide content of 0 wt% or more and less than 1 wt%.

14. The polylactic acid according to claim 12 which has a stereocomplex crystal content of 80 % or more.

**15.** A molded article of the polylactic acid of claim 12.

**INTERNATIONAL SEARCH REPORT**

International application No.
PCT/JP2007/065468

A. CLASSIFICATION OF SUBJECT MATTER
*C08G63/08*(2006.01)i, *C08G63/90*(2006.01)i, *C08L101/16*(2006.01)i

According to International Patent Classification (IPC) or to both national classification and IPC

B. FIELDS SEARCHED

Minimum documentation searched (classification system followed by classification symbols)
C08G63/00-91, C08L101/16

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)
WPI

C. DOCUMENTS CONSIDERED TO BE RELEVANT

| Category* | Citation of document, with indication, where appropriate, of the relevant passages | Relevant to claim No. |
|---|---|---|
| X<br>Y | JP 2002-356543 A (Toray Industries, Inc.),<br>13 December, 2002 (13.12.02),<br>Claims; Par. Nos. [0018], [0024] to [0058]; examples<br>(Family: none) | 12-15<br>1-11 |
| Y<br>A | JP 9-77863 A (Dainippon Ink And Chemicals, Inc.),<br>25 March, 1997 (25.03.97),<br>Par. Nos. [0054] to [0059]<br>& US 5844066 A | 1-11<br>12-15 |
| Y<br>A | JP 9-12690 A (Toyobo Co., Ltd.),<br>14 January, 1997 (14.01.97),<br>Claims; Par. No. [0017]<br>(Family: none) | 1-11<br>12-15 |

☒ Further documents are listed in the continuation of Box C.　☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

Date of the actual completion of the international search
17 October, 2007 (17.10.07)

Date of mailing of the international search report
30 October, 2007 (30.10.07)

Name and mailing address of the ISA/
Japanese Patent Office

Authorized officer

Facsimile No.

Telephone No.

Form PCT/ISA/210 (second sheet) (April 2007)

**INTERNATIONAL SEARCH REPORT**

International application No.
PCT/JP2007/065468

C (Continuation). DOCUMENTS CONSIDERED TO BE RELEVANT

| Category* | Citation of document, with indication, where appropriate, of the relevant passages | Relevant to claim No. |
|---|---|---|
| Y<br>A | JP 8-231688 A (Shimadzu Corp.),<br>10 September, 1996 (10.09.96),<br>Claims; Par. No. [0018]<br>(Family: none) | 1-11<br>12-15 |
| A | JP 2006-182926 A (Teijin Ltd.),<br>13 July, 2006 (13.07.06),<br>Full text<br>& EP 1780234 A1 & WO 2006/009285 A1 | 1-15 |
| A | WO 2005/090438 A1 (Kureha Corp.),<br>29 September, 2005 (29.09.05),<br>Full text<br>& EP 1736498 A1 | 1-15 |
| A | US 5317064 A (Maria Spinu),<br>31 May, 1994 (31.05.94),<br>Full text<br>(Family: none) | 1-15 |
| P,X<br>P,A | JP 2007-70413 A (Teijin Ltd.),<br>22 March, 2007 (22.03.07),<br>Claims; Par. Nos. [0014] to [0017]<br>(Family: none) | 12-15<br>1-11 |
| E,A | JP 2007-191625 A (Teijin Ltd.),<br>02 August, 2007 (02.08.07),<br>Full text<br>(Family: none) | 1-15 |

Form PCT/ISA/210 (continuation of second sheet) (April 2007)

**INTERNATIONAL SEARCH REPORT**

International application No.
PCT/JP2007/065468

**Box No. II Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III Observations where unity of invention is lacking (Continuation of item 3 of first sheet)**

This International Searching Authority found multiple inventions in this international application, as follows:

The technical feature of the invention of claim 1 is a method for producing a polylactic acid, while the technical feature of the invention of claim 12 is a polylactic acid having a specific weight average molecular weight and a specific crystal melting point determined by DSC under specific conditions. Since the invention of claim 12 is not novel in view of the documents mentioned in the international search report and the invention of claim 1 does not involve an inventive step in view of the documents mentioned in the international search report, the technical feature common to these inventions does not make a "contribution" over the prior art.

(Continued to extra sheet)

1. ☐ As all required additional search fees were timely paid by the applicant, this international search report covers all searchable claims.
2. ☒ As all searchable claims could be searched without effort justifying additional fees, this Authority did not invite payment of additional fees.
3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest** the

☐ The additional search fees were accompanied by the applicant's protest and, where applicable, payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (April 2007)

INTERNATIONAL SEARCH REPORT

International application No.
PCT/JP2007/065468

Continuation of Box No.III of continuation of first sheet(2)

Consequently, the common technical feature cannot be considered as a "special technical feature", and thus the inventions do not satisfy the requirement of unity of invention. This international application is therefore considered to contain two inventions.

Form PCT/ISA/210 (extra sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2005255806 A
- JP 2005269588 A
- JP 2002356543 A
- US P5317064 A